# EUROPÄISCHE PATENTSCHRIFT

(11) **EP 3 298 312 B1**
(45) Veröffentlichungstag und Bekanntmachung des Hinweises auf die Patenterteilung: **07.11.2018**
(21) Anmeldenummer: 15763627.5
(22) Anmeldetag: 18.09.2015
(51) Int. Cl.: F16K 31/524, G05G 1/00

(54) **ROLLENHEBEL-BETÄTIGUNGSEINRICHTUNG UND DAMIT AUSGESTATTETE ROLLENHEBEL-VENTILANORDNUNG**
ROLLER LEVER ACTUATING DEVICE, AND ROLLER LEVER VALVE ARRANGEMENT EQUIPPED THEREWITH
DISPOSITIF D'ACTIONNEMENT DE LEVIER À GALET ET ENSEMBLE DE SOUPAPE À LEVIER À GALET ÉQUIPÉ DE CELUI-CI

(43) Veröffentlichungstag der Anmeldung: 28.03.2018
(73) Patentinhaber: Festo AG & Co. KG, 73734 Esslingen (DE)
(72) Erfinder: STERNS, Frank, 71034 Böblingen (DE); PAECH, Stephan, 73732 Esslingen (DE)
(74) Vertreter: Patentanwälte Magenbauer & Kollegen Partnerschaft mbB
(86) Internationale Anmeldenummer: PCT/EP2015/071425
(87) Internationale Veröffentlichungsnummer: WO 2017/045723

(56) Entgegenhaltungen:
- DE-U- 1 721 502
- DE-U1- 8 436 606
- FR-E- 84 351
- GB-A- 971 505

## Beschreibung

Die Erfindung betrifft eine Rollenhebel-Betätigungseinrichtung für Rollenhebelventile, mit einem zur Fixierung an einer Ventileinheit eines Rollenhebelventils dienenden Lagersockel und einem bezüglich des Lagersockels verschwenkbaren Rollenhebel, wobei der Rollenhebel einen eine Antriebsrolle tragenden Schwenkarm aufweist, der unter Vorgabe einer Arbeitsposition des Rollenhebels mittels eine Schwenkachse vorgebenden Schwenklagermitteln verschwenkbar an dem Lagersockel gelagert ist und der mindestens einen zu der Schwenkachse beabstandeten Kraftabgabeabschnitt aufweist, der zum drückenden Zusammenwirken mit einem einer zu betätigenden Ventilgliedanordnung eines Rollenhebelventils zugeordneten Betätigungsabschnitt vorgesehen ist. Die Erfindung betrifft ferner eine Rollenhebel-Ventilanordnung mit mindestens einem Rollenhebelventil, das mit einer derartigen Rollenhebel-Betätigungseinrichtung ausgestattet ist.

Aus der DE 84 36 606 U1 ist eine Rollenhebel-Ventilanordnung bekannt, die mit mehreren Rollenhebel-Betätigungseinrichtungen der vorgenannten Art ausgestattet ist. Die bekannte Rollenhebel-Ventilanordnung enthält mehrere zu einer Baueinheit zusammengefasste Rollenhebelventile, die jeweils mit einer eigenen Rollenhebel-Betätigungseinrichtung ausgestattet sind. Jede Rollenhebel-Betätigungseinrichtung verfügt über einen am Ventilgehäuse einer Ventileinheit des zugeordneten Rollenhebelventils angebrachten Lagersockel und einen schwenkbeweglich an dem Lagersockel fixierten Schwenkarm, der gemeinsam mit einer von ihm getragenen Antriebsrolle einen verschwenkbaren Rollenhebel bildet. Im Betrieb der Rollenhebel-Ventilanordnung kann ein sich relativ zu dem Rollenhebel bewegendes Betätigungsglied, das beispielsweise ein an einem Maschinenteil ausgebildeter Betätigungsnocken ist, auf die Antriebsrolle einwirken und dadurch eine Schwenkbewegung des Rollenhebels bezüglich des Lagersockels hervorrufen. Bei dieser Schwenkbewegung wird der Rollenhebel um einen Betriebs-Schwenkwinkel verschwenkt, wobei sein Schwenkarm mit einem zur Schwenkachse beabstandeten Kraftabgabeabschnitt auf einen mit einem Ventilglied in Wirkverbindung stehenden Betätigungsabschnitt drückend einwirkt. Die Schwenklagermittel enthalten eine am Lagersockel angeordnete erste Schwenklagereinheit in Gestalt zweier Rastöffnungen und eine an dem Schwenkarm angeordnete zweite Schwenklagereinheit in Gestalt zweier in die Rastöffnungen drehbar eingerasteter Achsstummeln. Bei sämtlichen Rollenhebel-Betätigungseinrichtungen ist der Schwenkweg der Kraftabgabeabschnitte bei gleichem Betriebs-Schwenkwinkel des Schwenkarmes identisch. Dieser Betriebs-Schwenkwinkel ist auf den Arbeitshub des zugeordneten Betätigungsabschnittes abgestimmt. Um unterschiedliche Arbeitshübe eines Betätigungsabschnittes hervorrufen zu können, müssen in dem bekannten Fall entsprechend unterschiedlich gestaltete Rollenhebel-Betätigungseinrichtungen zur Verfügung gestellt werden.

Aus der DE 1721502 U ist ein Rollenhebelventil bekannt, das über eine Ventileinheit verfügt, deren Ventilgehäuse über stirnseitig wegragende Wandabschnitte verfügt, zwischen denen mit Hilfe eines Achsbolzens ein verschwenkbarer Rollenhebel angeordnet ist.

Der Erfindung liegt die Aufgabe zugrunde, Maßnahmen zu treffen, die es ermöglichen, eine Rollenhebel-Betätigungseinrichtung für unterschiedliche Anwendungsfälle nutzbar zu machen.

Zur Lösung dieser Aufgabe ist bei einer Rollenhebel-Betätigungseinrichtung der eingangs genannten Art vorgesehen, dass durch die Schwenklagermittel mehrere alternative, sich im Abstand zwischen der Schwenkachse und dem Kraftabgabeabschnitt des Schwenkarmes unterscheidende Arbeitspositionen des Rollenhebels vorgebbar sind.

Die Aufgabe wird ferner durch eine Rollenhebel-Ventilanordnung gelöst, die über mindestens ein Rollenhebelventil verfügt, das mit einer in dem vorgenannten Sinne ausgebildeten Rollenhebel-Betätigungseinrichtung ausgestattet ist.

Auf diese Weise besteht die Möglichkeit, beim Zusammenbau der Rollenhebel-Betätigungseinrichtung den Rollenhebel mit seinem Schwenkarm ausgewählt in einer von mehreren unterschiedlichen Arbeitspositionen am Lagersockel anzubringen. Dadurch lassen sich die kinematischen Auswirkungen der im Betrieb stattfindenden Schwenkbewegung des Rollenhebels variabel an unterschiedliche Gegebenheiten anpassen. So können mit ein und demselben Typ von Rollenhebel-Betätigungseinrichtung je nachdem, in welcher Arbeitsposition der Rollenhebel montiert wird, an dem dem Betätigungsabschnitt des Ventilgliedes zugeordneten Kraftabgabeabschnitt unterschiedlich große Schwenkwege beziehungsweise Schwenkhübe abgegriffen werden. Dadurch kann beispielsweise die Möglichkeit geschaffen werden, Kolbenschieberventile und Sitzventile, die üblicherweise über stark voneinander abweichende Umschalthübe ihrer Ventilglieder verfügen, mit ein und demselben Typ von Rollenhebel-Betätigungseinrichtung auszustatten, die sich lediglich in der voneinander abweichenden Arbeitsposition ihres Rollenhebels voneinander unterscheiden. Verglichen mit einer Bereitstellung eigenständiger Rollenhebel-Betätigungseinrichtungen für jeden unterschiedlichen Anwendungszweck werden dadurch die Herstellungskosten ebenso reduziert wie die Kosten für Lagerhaltung und Logistik. Bevorzugt sind die Schwenklagermittel so ausgebildet, dass auch nach dem Zusammenbau der Rollenhebel-Betätigungseinrichtung die Möglichkeit besteht, die Arbeitsposition des Rollenhebels zu verändern. Dies bietet dem Anwender des Produkts die vorteilhafte Möglichkeit, bei Bedarf selbst eine Umrüstung in Bezug auf unterschiedliche Anwendungsfälle vornehmen zu können.

Vorteilhafte Weiterbildungen der Erfindung gehen aus den Unteransprüchen hervor.

Die Schwenklagermittel der Rollenhebel-Betätigungseinrichtung sind zweckmäßigerweise für eine schwenkbare Montage des Schwenkarms an dem Lagersockel in wenigstens zwei unterschiedlichen Arbeitspositionen ausgebildet. Im Regelfall wird es genügen, genau zwei unterschiedliche Arbeitspositionen zu ermöglichen. Prinzipiell können allerdings durch eine entsprechende Ausgestaltung der Schwenklagermittel beliebig viele Arbeitspositionen des Rollenhebels vorgegeben werden.

Bei den mit Hilfe der Schwenklagermittel auswählbaren Arbeitspositionen handelt es sich vorzugsweise um diskrete Positionen, die jeweils fest vorgegeben sind. Im Vergleich zu einer Ausführungsform, bei der stufenlos unterschiedliche Arbeitspositionen realisierbar sind, hat dies den Vorteil, dass die Rollenhebel-Betätigungseinrichtung bei der Herstellung ab Werk optimal hinsichtlich bevorzugter unterschiedlicher Anwendungsfälle ausgelegt werden kann.

In einer bevorzugten Ausgestaltung verfügt die Rollenhebel-Betätigungseinrichtung an dem Lagersockel über mindestens eine lagersockelseitige Schwenklagereinheit und an dem Schwenkarm über mindestens eine schwenkarmseitige Schwenklagereinheit. Zumindest bei dem Lagersockel oder bei dem Schwenkarm ist die zugeordnete Schwenklagereinheit mehrfach vorhanden, wobei die mehreren vorhandenen Schwenklagereinheiten bezogen auf den Längsverlauf der Schwenkachse mit Querabstand zueinander angeordnet sind. Die Schwenklagermittel bieten die Möglichkeit, jede Schwenklagereinheit des Schwenkarms ausgewählt mit jeder Schwenklagereinheit des Lagersockels schwenkbeweglich zu koppeln und dadurch unterschiedliche Arbeitspositionen des Rollenhebels vorzugeben, bei denen die Abstände zwischen der Schwenkachse und dem Kraftabgabeabschnitt des Schwenkarms voneinander abweichen.

Es besteht die vorteilhafte Möglichkeit, sowohl am Lagersockel als auch am Schwenkarm jeweils mehrere Schwenklagereinheiten auszubilden, die ausgewählt unter Gewährleistung eines Schwenkfreiheitsgrades miteinander koppelbar sind. Als besonders vorteilhaft wird es allerdings angesehen, wenn nur der Lagersockel oder nur der Schwenkarm über eine Mehrfachanordnung von Schwenklagereinheiten verfügt und an der jeweils anderen Komponente nur eine einzige Schwenklagereinheit vorhanden ist, die sich nach Bedarf mit jeder der mehreren vorgenannten Schwenklagereinheiten koppeln lässt.

Als besonders zweckmäßig wird dabei eine Bauform angesehen, bei der sich die mehreren Schwenklagereinheiten am Lagersockel befinden.

Bevorzugt enthalten die Schwenklagermittel einen zur Schwenkachse koaxialen Achsbolzen, um den Schwenkarm verschwenkbar mit dem Lagersockel zu koppeln. Bei dem Achsbolzen handelt es sich insbesondere um ein bezüglich des Schwenkarmes und des Lagersockels separates Bauteil, das beim Zusammenbau der Rollenhebel-Betätigungseinrichtung mit den beiden einander zugeordneten Schwenklagereinheiten vereinigt wird und das an dem Schwenkarm und/oder dem Lagersockel unverlierbar fixiert wird. Letzteres beispielsweise durch Einpressen in den Lagersockel.

Bevorzugt ist jede Schwenklagereinheit mit einer zur Aufnahme eines Achsbolzens ausgebildeten Lagerausnehmung versehen. Im in einer Arbeitsposition gekoppelten Zustand zwischen Schwenkarm und Lagersockel sind die beiderseitigen Lagerausnehmungen koaxial zueinander ausgerichtet und von einem gemeinsam zugeordneten Achsbolzen durchsetzt.

Bei dem Lagersockel und/oder bei dem Schwenkarm kann die Lagerausnehmung der jeweiligen Schwenklagereinheit aus zwei zueinander koaxialen und axial beabstandet zueinander angeordneten Ausnehmungsabschnitten bestehen. Sind die besagten Komponenten beispielsweise als Blechbiegeteile ausgebildet, können sie jeweils über zwei sich gegenüberliegende Schenkelabschnitte verfügen, die jeweils von einem nach Art einer Bohrung ausgebildeten Ausnehmungsabschnitt durchsetzt sind.

Der Lagersockel ist bevorzugt so ausgebildet, dass er einen Arbeitsbereich aufweist, in dem ein zur Schwenkachse beabstandeter Kraftabgabeabschnitt des Schwenkarms mit einem einer zu betätigenden Ventilgliedanordnung zugeordneten Betätigungsabschnitt zusammenwirkt. Bevorzugt ist der Schwenkarm mit mehreren Kraftabgabeabschnitten versehen, die quer zu der Schwenkachse nebeneinander angeordnet sind, entweder unmittelbar oder mit einem gewissen Abstand nebeneinander. In den durch die Schwenklagermittel vorgebbaren unterschiedlichen Arbeitspositionen des Rollenhebels befinden sich unterschiedliche Kraftabgabeabschnitte in dem Arbeitsbereich, das heißt, die in Abhängigkeit von der Arbeitsposition wirksamen Kraftabgabeabschnitte sind unterschiedlich weit von der Schwenkachse beabstandet. Bei gleichem Betriebs-Schwenkwinkel des Schwenkarmes ergeben sich auf diese Weise unterschiedliche Schwenkwege der jeweils wirksamen Kraftabgabeabschnitte.

Bei einer besonders einfachen Ausführungsform ist die Antriebsrolle direkt an dem Schwenkarm angebracht. Eine hierzu alternative Ausführungsform sieht vor, dass die Antriebsrolle an einem Kipparm angeordnet ist, der seinerseits an dem Schwenkarm um eine zu dessen Schwenkachse parallele Kippachse verschwenkbar gelagert ist. Ein zusätzlich mit einem Kipparm ausgestatteter Rollenhebel kann als Kipprollenhebel bezeichnet werden.

Die erfindungsgemäße Rollenhebel-Ventilanordnung kann nur ein einziges Rollenhebelventil oder auch eine Mehrzahl von Rollenhebelventilen aufweisen. Bei einer Mehrzahl von Rollenhebelventilen ist jedes Rollenhebelventil mit dem gleichen Typ der erfindungsgemäßen Rollenhebel-Betätigungseinrichtung ausgestattet. Es besteht hier allerdings die vorteilhafte Möglichkeit, bei mehreren der Rollenhebelventile die Rollenhebel-Betätigungseinrichtung so zusammenzubauen, dass sie sich in den Arbeitspositionen ihrer Rollenhebel voneinander unterscheiden. Mit anderen Worten können mehrere Rollenhebelventile der Rollenhebel-Ventilanordnung derart mit unterschiedlich konfigurierten Rollenhebel-Betätigungseinrichtungen ausgestattet sein, dass sich im Betrieb des Rollenhebelventils bei gleichem Betriebs-Schwenkwinkel des Schwenkarmes unterschiedlich große Schwenkwege der mit den Betätigungsabschnitten kooperierenden Kraftabgabeabschnitte einstellen. Dabei ist der Schwenkweg der Kraftabgabeabschnitte auf den Arbeitshub des Betätigungsabschnittes des jeweils zugeordneten Rollenhebelventils abgestimmt. Es besteht folglich die vorteilhafte Möglichkeit, prinzipbedingt unterschiedlich große Arbeitshübe verschiedenartiger Typen von Ventileinheiten der Rollenhebelventile mit ein und derselben erfindungsgemäßen Bauart von Rollenhebel-Betätigungseinrichtung zu betreiben.

Vorstehendes gilt insbesondere in Bezug auf als Kolbenschieberventile ausgebildete Rollenhebelventile und als Sitzventile ausgebildete Rollenhebelventile. Bei diesen Ventiltypen haben die Ventilglieder und folglich auch die Betätigungsabschnitte sehr häufig einen unterschiedlichen Hub, sodass es vorteilhaft ist, wenn sich beide Arten von Rollenhebelventilen mit ein und derselben erfindungsgemäßen Art von Rollenhebel-Betätigungseinrichtungen ausstatten lassen, bei denen lediglich der Rollenhebel in unterschiedlichen Arbeitspositionen positioniert werden muss.

Für den Nutzer von Rollenhebelventilen bietet sich mit der erfindungsgemäßen Ausgestaltung der Vorteil, dass er mit Ventileinheiten unterschiedlichen Grundtyps ausgestattete Rollenhebelventile problemlos austauschen kann, ohne Maßnahmen treffen zu müssen, die den Betriebs-Schwenkwinkel des Schwenkarmes der Rollenhebel-Betätigungseinrichtung beeinflussen. Die einzige Anpassung, die erforderlich ist, ist die Verwendung einer Rollenhebel-Betätigungseinrichtung mit veränderter Arbeitsposition des Rollenhebels. Dies entweder dadurch, dass anstelle einer bisher genutzten ersten Rollenhebel-Betätigungseinrichtung eine zweite, entsprechend gestaltete Rollenhebel-Betätigungseinrichtung verwendet wird, bei der der Rollenhebel in einer abweichenden Arbeitsposition montiert ist. Oder aber, bei entsprechender Ausgestaltung der Rollenhebel-Betätigungseinrichtung, durch Umrüstung der Rollenhebel-Betätigungseinrichtung selbst, indem der Schwenkhebel bezüglich des Lagersockels so versetzt wird, dass die gewünschte andere Arbeitsposition des Rollenhebels vorliegt.

Die Rollenhebel-Betätigungseinrichtung ist zweckmäßigerweise jeweils an einer axialen Stirnseite des Ventilgehäuses des zugeordneten Rollenhebelventils angeordnet. Dort befindet sich auch der oben beschriebene Arbeitsbereich, in dem der Schwenkarm mit seinem Kraftabgabeabschnitt mit dem Betätigungsabschnitt der Ventileinheit zusammenwirkt. Der Betätigungsabschnitt der Ventileinheit ragt abhängig vom Betriebszustand zweckmäßigerweise mehr oder weniger weit stirnseitig aus dem Ventilgehäuse der Ventileinheit heraus.

Nachfolgend wird die Erfindung anhand der beiliegenden Zeichnung näher erläutert. In dieser zeigen:
- Figur 1: ein Rollenhebelventil einer bevorzugten Ausführungsform einer erfindungsgemäßen Rollenhebel-Ventilanordnung, das mit einer ebenfalls bevorzugten Bauform einer erfindungsgemäßen Rollenhebel-Betätigungseinrichtung ausgestattet ist, das Ganze in einer perspektivischen Darstellung und in der unbetätigten Grundstellung des Rollenhebels,
- Figur 2: einen Längsschnitt durch das Rollenhebelventil der Figur 1 gemäß Schnittlinie II-II aus Figur 1, wobei ergänzend schematisch ein zur Betätigung des Rollenhebels geeignetes Betätigungsglied illustriert ist,
- Figur 3: das Rollenhebelventil aus Figur 1 in der betätigten Stellung des Rollenhebels,
- Figur 4: das Rollenhebelventil aus Figur 3 im Längsschnitt gemäß Schnittlinie IV-IV, wobei ein den Rollenhebel in der betätigten Stellung haltendes Betätigungsglied ergänzend angedeutet ist,
- Figur 5: in einer mit Figur 1 vergleichbaren Darstellung ein weiteres Rollenhebelventil erfindungsgemäßer Bauart, das mit der gleichen Rollenhebel-Betätigungseinrichtung wie das Rollenhebelventil der Figuren 1 bis 4 ausgestattet ist, bei dem jedoch der Rollenhebel in einer anderen Arbeitsposition am Lagersockel montiert ist,
- Figur 6: die Anordnung aus Figur 5 in einem Längsschnitt gemäß Schnittlinie VI-VI aus Figur 5, wobei wiederum ein zur Betätigung des Rollenhebels dienendes Betätigungsglied schematisch angedeutet ist,
- Figur 7: das Rollenhebelventil aus Figur 5 in der betätigten Stellung des zugeordneten Rollenhebels, und
- Figur 8: einen Längsschnitt des Rollenhebelventils aus Figur 7 im Längsschnitt gemäß Schnittlinie VIII-VIII aus Figur 7, wobei ergänzend ein den Rollenhebel in der betätigten Stellung haltendes Betätigungsglied illustriert ist.

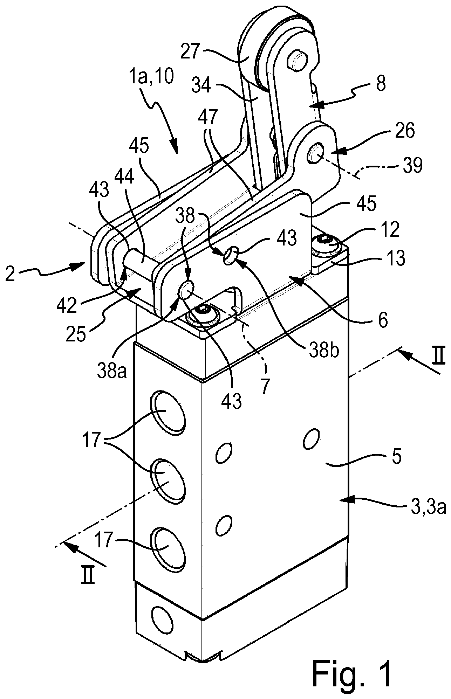

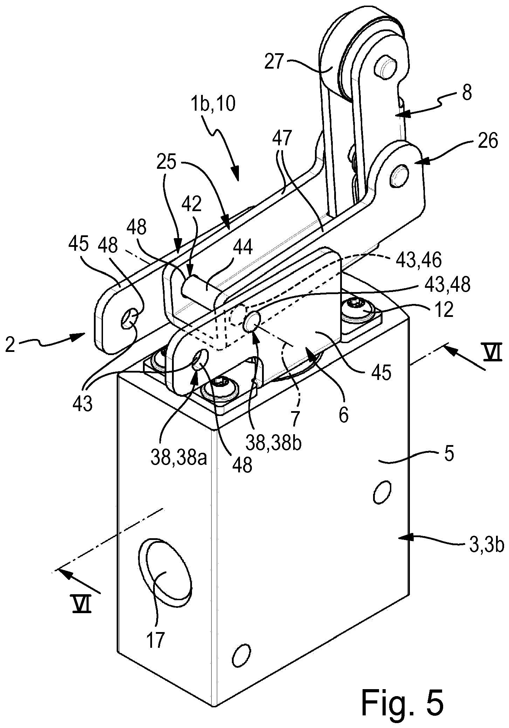

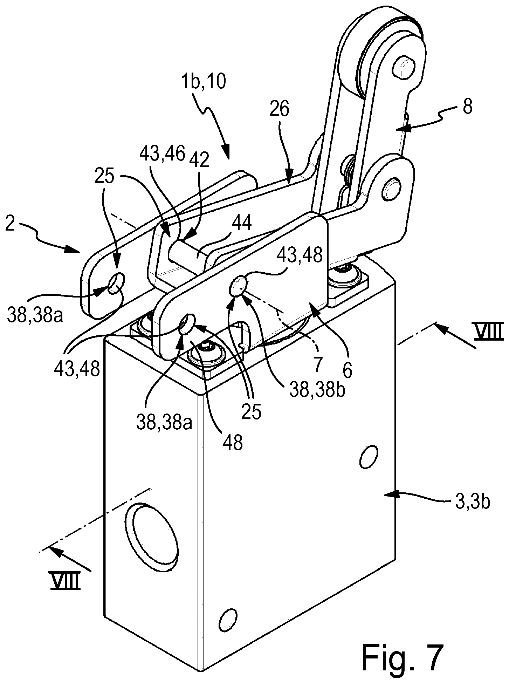

In der Zeichnung ist in den Figuren 1 bis 4 eine erste Bauform eines erfindungsgemäßen Rollenhebelventils la illustriert, während die Figuren 5 bis 8 eine zweite Bauform des erfindungsgemäßen Rollenhebelventils 1b illustrieren, wobei die beiden Rollenhebelventile 1a, 1b mit der gleichen Bauart einer erfindungsgemäßen Rollenhebel-Betätigungseinrichtung 2 ausgestattet sind.

Jedes Rollenhebelventil 1a, 1b hat eine Ventileinheit 3, die mit der Rollenhebel-Betätigungseinrichtung 2 bestückt ist. Die beiden Rollenhebelventile 1a, 1b unterscheiden sich im Aufbau ihrer Ventileinheit 3, wobei das in Figuren 1 bis 4 abgebildete erste Rollenhebelventil la über eine erste Ventileinheit 3a verfügt, während das in den Figuren 5 bis 8 illustrierte zweite Rollenhebelventil 1b mit einer von der ersten Ventileinheit 3a konstruktiv abweichenden zweiten Ventileinheit 3b ausgestattet ist.

Jede Ventileinheit 3 hat eine Längsachse 4 und verfügt über ein Ventilgehäuse 5, an dem an einer seiner beiden axialen Stirnflächen die Rollenhebel-Betätigungseinrichtung 2 angeordnet ist.

Wesentliche Bestandteile der Rollenhebel-Betätigungseinrichtung 2 sind ein zur Fixierung an der Ventileinheit 3 dienender Lagersockel 6 und ein an dem Lagersockel 6 um eine Schwenkachse 7 verschwenkbar gelagerter Rollenhebel 8.

Der Lagersockel 6 ist bevorzugt stirnseitig an dem Ventilgehäuse 5 befestigt. Exemplarisch liegt hierzu eine lösbare Befestigung vor, die insbesondere mittels Befestigungsschrauben 12 realisiert ist. Zweckmäßigerweise verfügt der Lagersockel 6 über eine Sockelplatte 13, die an eine vordere Stirnfläche 14 des Ventilgehäuses 5 angesetzt und mit Hilfe der Befestigungsschrauben 12 mit dem Ventilgehäuse 5 verschraubt ist.

Bei einem nicht gezeigten Ausführungsbeispiel ist der Lagersockel 6 ein einstückiger Bestandteil des Ventilgehäuses 5.

Im Innern des Ventilgehäuses 5 befindet sich eine Ventilgliedanordnung 15, die unter Ausführung einer in Achsrichtung der Längsachse 4 orientierten, durch einen Doppelpfeil illustrierten Umschaltbewegung 16 zwischen verschiedenen Schaltstellungen umschaltbar ist. Die Ventilgliedanordnung 15 steuert in Abhängigkeit von ihrer jeweiligen Schaltstellung die Fluidverbindung zwischen mehreren Ventilkanälen 17, die die Wandung des Ventilgehäuses 5 durchsetzen und die jeweils einerseits zur Außenfläche des Ventilgehäuse 5 offen sind und andererseits in eine im Innern des Ventilgehäuses 5 ausgebildete Ventilkammer 18 einmünden, in der sich die Ventilgliedanordnung 15 erstreckt.

Die Ventilgliedanordnung 15 kann gemäß Figuren 1 bis 4 über nur ein einziges Ventilglied oder aber auch gemäß Figuren 5 bis 8 über mehrere zueinander koaxiale Ventilglieder verfügen.

Die Ventilgliedanordnung 15 ist durch Federmittel 21 der Ventileinheit 3 in eine Grundstellung vorgespannt. In dieser Grundstellung ragt ein mit mindestens einem Ventilglied der Ventilgliedanordnung 15 antriebsmäßig kooperierender Betätigungsabschnitt 19 unter Einnahme einer Grundstellung im Bereich der vorderen Stirnfläche 14 aus dem Ventilgehäuse 5 heraus. Der Betätigungsabschnitt 19 kann, wie dies beim Ausführungsbeispiel der Figuren 5 bis 8 der Fall ist, ein einstückiger Bestandteil eines Ventilgliedes der Ventilgliedanordnung 15 sein. Alternativ kann es sich bei dem Betätigungsabschnitt 19 auch um eine bezüglich der Ventilgliedanordnung 15 gesonderte Komponente handeln, die mit einem Ventilglied der Ventilgliedanordnung 15 antriebsmäßig gekoppelt ist, insbesondere derart, dass es in der Lage ist, eine Schubkraft auf die Ventilgliedanordnung 15 auszuüben.

Durch die mittels der Federmittel 21 realisierte Federvorspannung der Ventilgliedanordnung 15 ist auch der Betätigungsabschnitt 19 in eine an der vorderen Stirnfläche 14 aus dem Ventilgehäuse 5 herausragende Grundstellung vorgespannt.

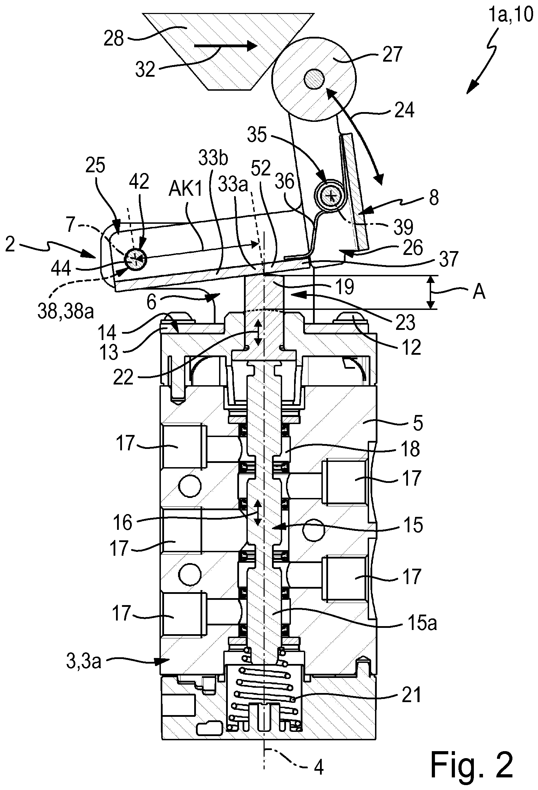

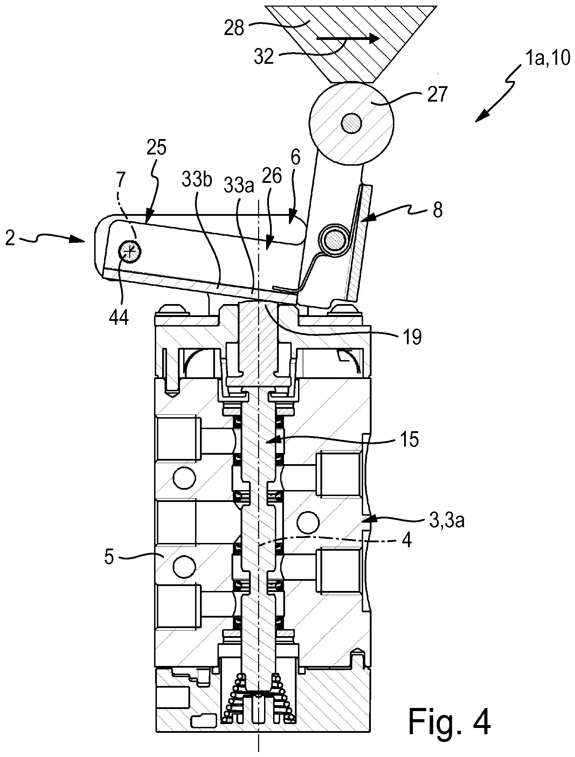

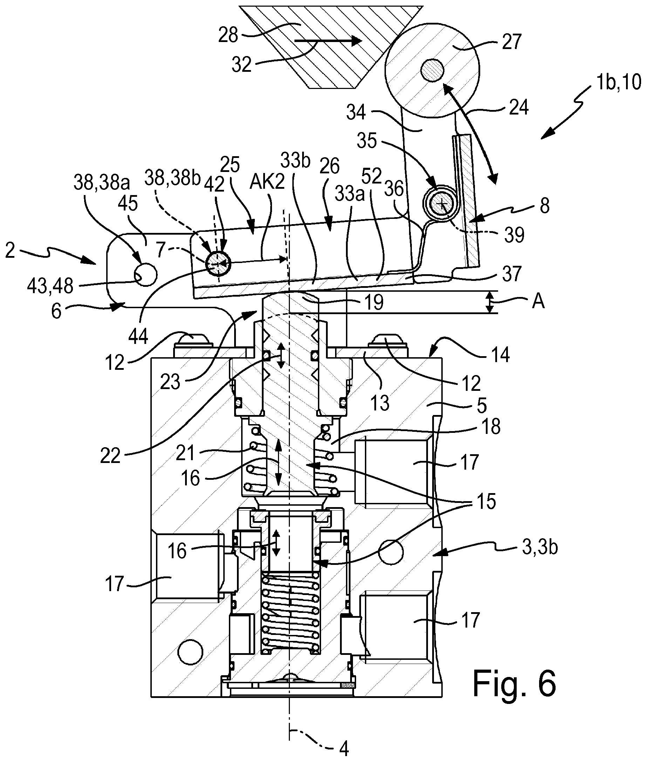

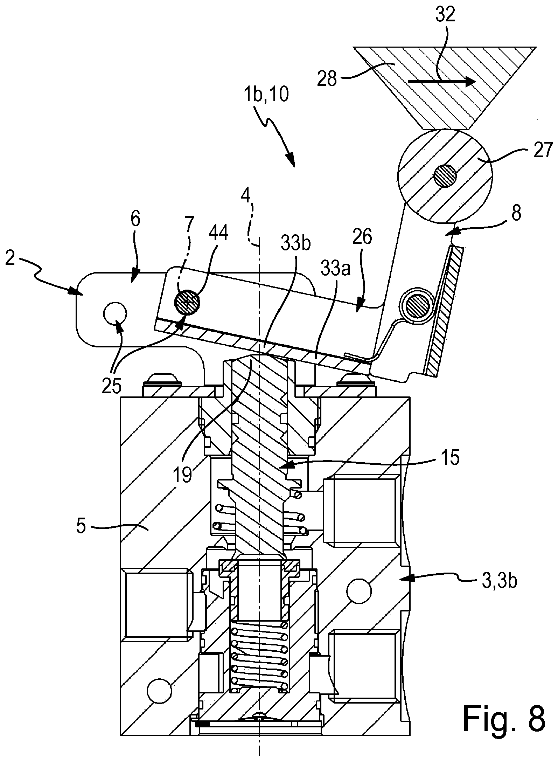

Der Betätigungsabschnitt 19 ist unter Ausführung einer durch einen Doppelpfeil angedeuteten, bevorzugt linearen Betätigungsbewegung 22 zwischen der aus Figuren 2 und 6 ersichtlichen unbetätigten Grundstellung und einer aus Figuren 4 und 8 ersichtlichen Arbeitsstellung bewegbar. In der Arbeitsstellung ragt der Betätigungsabschnitt 19 nicht oder weniger weit aus dem Ventilgehäuse 5 heraus als in der unbetätigten Grundstellung. In der unbetätigten Grundstellung des Betätigungsabschnittes 19 nimmt die Ventilgliedanordnung 15 eine erste Schaltstellung ein, in der betätigten Arbeitsstellung des Betätigungsabschnittes 19 eine zweite Schaltstellung. Die beiden Schaltstellungen unterscheiden sich im Verbindungsmuster der Ventilkanäle 17.

Exemplarisch ist das erste Rollenhebelventil la des Ausführungsbeispiels der Figuren 1 bis 4 ein Kolbenschieberventil. Die Ventilgliedanordnung 15 besteht hier aus einem als Kolbenschieber 15a ausgebildeten Ventilglied, das zur Ausführung seiner Steuerfunktion mit bezüglich des Ventilgehäuses 5 ortsfesten radialen Dichtflächen kooperiert. Im Unterschied dazu handelt es sich bei dem zweiten Rollenhebelventil 1b des Ausführungsbeispiels der Figuren 5 bis 8 um ein Sitzventil, bei dem die Ventilgliedanordnung 15 über ein oder mehrere Ventilglieder verfügt, die mit mindestens einem axial, das heißt in Achsrichtung der Umschaltbewegung 16 orientierten Ventilsitz zusammenwirken.

Die ersten und zweiten Rollenhebelventile 1a, 1b unterscheiden sich unter anderem in der Länge des Arbeitshubes "A" des Betätigungsabschnittes 19. Der Arbeitshub "A" ist die Wegstrecke, die der Betätigungsabschnitt 19 zwischen der unbetätigten Grundstellung und der betätigten Arbeitsstellung zurücklegt. Bei dem ersten Rollenhebelventil la der Figuren 1 bis 4 ist der Arbeitshub "A" größer als bei dem zweiten Rollenhebelventil 1b der Figuren 5 bis 8.

Die ersten und zweiten Rollenhebelventile 1a, 1b bilden jeweils für sich allein oder gemeinsam als Gruppe eine Rollenhebel-Ventilanordnung 10.

Der Lagersockel 6 weist einen Arbeitsbereich 23 auf und ist so an der Ventileinheit 3 angeordnet, dass sich der Betätigungsabschnitt 19 der Ventileinheit 3 in diesem Arbeitsbereich 23 befindet.

Der Rollenhebel 8 führt beim Verschwenken um die Schwenkachse 7 relativ zum Lagersockel 6 eine durch einen Doppelpfeil angedeutete Rollenhebel-Schwenkbewegung 24 aus. Die Schwenkebene dieser Rollenhebel-Schwenkbewegung 24 verläuft rechtwinkelig zu der Schwenkachse 7 und verläuft in den Figuren 2, 4, 6 und 8 parallel zur Zeichenebene. Die Schwenkachse 7 erstreckt sich zweckmäßigerweise in einer zu der Längsachse 4 der Ventileinheit 3 rechtwinkeligen Schwenkachsebene.

Die Schwenkachse 7 ist durch Schwenklagermittel 25 der Rollenhebel-Betätigungseinrichtung 2 definiert. Durch die Schwenklagermittel 25 ist ein Schwenkarm 26 des Rollenhebels 8 um die Schwenkachse 7 verschwenkbar mit dem Lagersockel 6 gekoppelt. Der Schwenkarm 26 ragt von der Schwenkachse 7 weg und trägt an einer zu der Schwenkachse 7 beabstandeten Stelle eine drehbare Antriebsrolle 27.

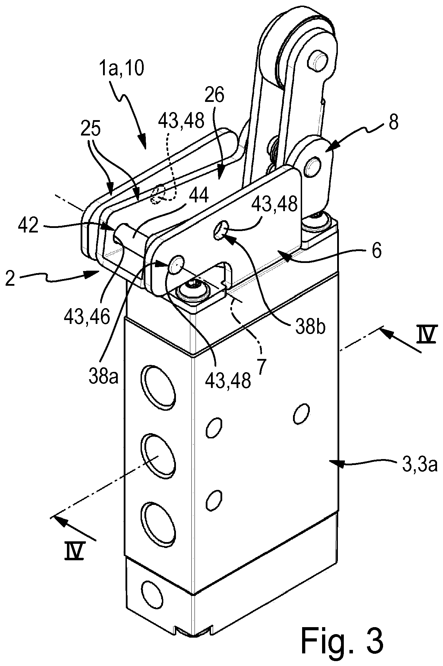

Über die Antriebsrolle 27 ist die Rollenhebel-Schwenkbewegung 24 hervorrufbar. Die Antriebsrolle 27 ist zum Zusammenwirken mit einem externen, beweglichen Betätigungsglied 28 ausgebildet. Im Betrieb ist das Rollenhebelventil 1a, 1b so installiert, dass die Antriebsrolle 27 in der unverschwenkten Grundstellung des Rollenhebels 8 in den durch einen Pfeil illustrierten Verfahrweg 32 des Betätigungsgliedes 28 ragt. Durch das sich bewegende Betätigungsglied 28 ist eine Stellkraft auf die Antriebsrolle 27 ausübbar, durch die der Rollenhebel 8 unter Ausführung der Rollenhebel-Schwenkbewegung 24 aus einer unverschwenkten Grundstellung gemäß Figuren 1, 2, 5 und 6 in eine aus Figuren 3, 4, 7 und 8 ersichtliche verschwenkte Arbeitsstellung verschwenkbar ist. Bei dem Betätigungsglied 28 handelt es sich bevorzugt um einen Bestandteil eines beweglichen Maschinenteils, der insbesondere nockenförmig ausgebildet ist.

Bei der vorgenannten Rollenhebel-Schwenkbewegung 24 drückt der Rollenhebel 8 mit einem zu der Schwenkachse 7 beabstandeten Kraftabgabeabschnitt 33a, 33b des Schwenkarms 26 auf den Betätigungsabschnitt 19 und verlagert diesen aus der unbetätigten Grundstellung in die betätigte Arbeitsstellung.

Der Schwenkarm 26 erstreckt sich axial vor dem Betätigungsglied 28 über das Betätigungsglied 28 hinweg und liegt mit seinem Kraftabgabeabschnitt 33a, 33b bevorzugt nur lose stirnseitig an dem Betätigungsglied 28 an, dessen Stirnfläche zweckmäßigerweise abgerundet ist.

Wenn sich das Betätigungsglied 28 wieder aus dem Einflussbereich der Antriebsrolle 27 entfernt hat, sei es, dass es die Antriebsrolle 27 komplett überfahren hat oder sich wieder in seine Ausgangsstellung zurückbewegt hat, wird der Rollenhebel 8 durch den direkt oder indirekt von den Federmitteln 21 beaufschlagten Betätigungsabschnitt 19 in die unverschwenkte Grundstellung zurückgeschwenkt.

Beim Ausführungsbeispiel ist der Rollenhebel 8 zweiarmig ausgeführt und weist zusätzlich zu dem Schwenkarm 26 auch noch einen seinerseits schwenkbar an dem Schwenkarm 26 gelagerten Kipparm 34 auf, wobei die Antriebsrolle 27 drehbar an dem Kipparm 34 angeordnet ist. Bei einer nicht gezeigten weiteren Ausführungsform ist kein Kipparm 34 vorhanden und die Antriebsrolle 27 ist direkt an dem Schwenkarm 26 drehbar gelagert. Jedenfalls ist die Antriebsrolle 27 bei allen Ausführungsbeispielen des Rollenhebels 8 mit Abstand zur Schwenkachse 7 des Schwenkarmes 26 angeordnet.

Bei der Rollenhebel-Schwenkbewegung 24 zwischen der unverschwenkten Grundstellung und der verschwenkten Arbeitsstellung wird der Schwenkarm 26 relativ zum Lagersockel 6 um einen Schwenkwinkel verschwenkt, der als Betriebs-Schwenkwinkel bezeichnet sei.

Der Kipparm 34 ist in einem Lagerbereich 35 derart schwenkbeweglich an dem Schwenkarm 26 gelagert, dass er diesbezüglich um eine zu der Schwenkachse 7 parallele Kippachse 39 verschwenkbar ist. Bevorzugt sind zwischen dem Kipparm 34 und dem Schwenkarm 26 wirksame Federmittel 36 vorhanden, die den Kipparm 34 federelastisch nachgiebig in eine bezüglich des Schwenkarmes 26 eingenommene Grundstellung vorspannen, in der er an einem Anschlagabschnitt 37 des Schwenkarmes 26 anliegt.

Die zur Schwenklagerung des Schwenkarms 26 bezüglich des Lagersockels 6 dienenden Schwenklagermittel 25 sind so ausgebildet, dass der Rollenhebel 8 alternativ in jeder von mehreren möglichen Arbeitspositionen verschwenkbar mit dem Lagersockel 6 koppelbar ist. Durch die Schwenklagermittel 25 sind also mehrere alternative Arbeitspositionen des Rollenhebels bezüglich des Lagersockels 6 vorgebbar, wobei sich diese mehreren Arbeitspositionen durch einen unterschiedlichen Abstand zwischen der Schwenkachse 7 und dem mit dem Betätigungsabschnitt 19 zusammenwirkenden Kraftabgabeabschnitt 33a, 33b auszeichnen.

Die Schwenklagermittel 25 sind so ausgebildet, dass sie eine schwenkbare Montage des Schwenkarmes 26 an dem Lagersockel 6 in wenigstens zwei unterschiedlichen Arbeitspositionen ermöglichen. Exemplarisch erlauben die Schwenklagermittel 25 die alternative Montage des Schwenkarmes 26 in genau zwei Arbeitspositionen. Die erste Arbeitsposition ist aus Figuren 1 bis 4 ersichtlich, wobei ein Abstand zwischen der Schwenkachse 7 und dem Kraftabgabeabschnitt 33a mit "AK1" kenntlich gemacht ist. In der Ausgestaltung der Figuren 5 bis 8 ist der Rollenhebel 8 in der zweiten möglichen Arbeitsposition montiert, wobei ein hier zwischen der Schwenkachse 7 und dem Kraftabgabeabschnitt 33b vorhandener Abstand mit "AK2" kenntlich gemacht ist. Beim Ausführungsbeispiel ist der in der zweiten Arbeitsposition vorhandene Abstand "AK2" kleiner als der in der ersten Arbeitsposition vorhandene Abstand "AK1".

Um die variable Montage des Schwenkarmes 26 an dem Lagersockel 6 zu ermöglichen, ist beim Ausführungsbeispiel an dem Lagersockel 6 eine der Anzahl der möglichen Arbeitspositionen entsprechende Anzahl von lagersockelseitigen Schwenklagereinheiten 38 vorhanden, exemplarisch also zwei Stück, die im Folgenden zur besseren Unterscheidung auch als erste lagersockelseitige Schwenklagereinheit 38a und als zweite lagersockelseitige Schwenklagereinheit 38b bezeichnet werden. Der Schwenkarm 26 hingegen ist nur mit einer einzigen schwenkarmseitigen Schwenklagereinheit 42 ausgestattet. Beide lagersockelseitigen Schwenklagereinheiten 38, 38a, 38b sind rechtwinkelig zu der Längsachse 4 mit Abstand zu dem Arbeitsbereich 23 und dem darin befindlichen Betätigungsabschnitt 19 an dem Lagersockel 6 ausgebildet, wobei die zweite lagersockelseitige Schwenklagereinheit 38b beim Ausführungsbeispiel näher an dem Arbeitsbereich 23 beziehungsweise dem Betätigungsabschnitt 19 liegt als die erste lagersockelseitige Schwenklagereinheit 38a.

In der ersten Arbeitsposition gemäß Figuren 1 bis 4 ist der Schwenkarm 26 an seiner schwenkarmseitigen Schwenklagereinheit 42 mit der ersten lagersockelseitigen Schwenklagereinheit 38, 38a schwenkbeweglich gekoppelt. In der zweiten Arbeitsposition gemäß Figuren 5 bis 8 ist der Schwenkarm 26 an seiner schwenkarmseitigen Schwenklagereinheit 42 mit der zweiten lagersockelseitigen Schwenklagereinheit 38, 38b verschwenkbar gekoppelt. Als Kraftabgabeabschnitt 33a, 33b fungiert jeweils derjenige Längenabschnitt des Schwenkarms 26, der sich in dem Arbeitsbereich 23 befindet und dort dem Betätigungsabschnitt 19 vorgelagert ist. Folglich weist der Schwenkarm 26 zwei unterschiedlich weit von der Schwenkachse 7 entfernte erste und zweite Kraftabgabeabschnitte 33a, 33b auf, von denen der erste Kraftabgabeabschnitt 33a in der ersten Arbeitsposition und der zweite Kraftabgabeabschnitt 33b in der zweiten Arbeitsposition mit dem Betätigungsabschnitt 19 kooperiert. Die beiden Kraftabgabeabschnitte 33a, 33b schließen sich quer zu der Schwenkachse 7 entweder unmittelbar aneinander an oder sind beabstandet zueinander angeordnet.

Ersichtlich führt diese Konstellation dazu, dass der in der ersten Arbeitsposition wirksame erste Kraftabgabeabschnitt 33a bei der Rollenhebel-Schwenkbewegung 24 einen größeren Schwenkweg zurücklegt als der zweite Kraftabgabeabschnitt 33b in der zweiten Arbeitsposition des Rollenhebels 8.

Die beiden Abstände "AK1" und "AK2" sind derart auf die unterschiedlich großen Arbeitshübe "A" des Betätigungsabschnittes 19 der unterschiedlichen Typen von Ventileinheiten 3 abgestimmt, dass der in der ersten Arbeitsposition von dem ersten Kraftabgabeabschnitt 33a ausführbare Schwenkweg zumindest im Wesentlichen dem Arbeitshub "A" des Betätigungsabschnittes 19 der ersten Ventileinheit 3a entspricht und dass der von dem zweiten Kraftabgabeabschnitt 33b bei der Rollenhebel-Schwenkbewegung 24 zurücklegbare Schwenkweg zumindest im Wesentlichen dem Arbeitshub "A" des Betätigungsabschnittes 19 der zweiten Ventileinheit 3b entspricht.

Folglich lassen sich mit ein und derselben Bauart von Rollenhebel-Betätigungseinrichtungen 2 allein durch die wahlweise Schwenklagerung des Rollenhebels 8 an der ersten oder zweiten lagersockelseitigen Schwenklagereinheit 38, 38a, 38b unterschiedliche Typen von Ventileinheiten 3 betreiben, die sich im Arbeitshub "A" ihres Betätigungsabschnittes 19 voneinander unterscheiden.

Bei einem nicht illustrierten Ausführungsbeispiel ist der Lagersockel 6 mit einer einzigen lagersockelseitigen Schwenklagereinheit 38 ausgestattet, während an dem Schwenkarm 26 mehrere zueinander beabstandete schwenkarmseitige Schwenklagereinheiten 42 vorhanden sind, die zur Vorgabe unterschiedlicher Arbeitspositionen des Rollenhebels 8 selektiv mit der einzigen lagersockelseitigen Schwenklagereinheit 38 koppelbar sind.

Bei einem weiteren, ebenfalls nicht abgebildeten Ausführungsbeispiel verfügen sowohl der Lagersockel 6 als auch der Schwenkarm 26 über mehrere quer zur Schwenkachse mit Abstand zueinander angeordnete lagersockelseitige Schwenklagereinheiten 38 und schwenkarmseitige Schwenklagereinheiten 42, die beliebig miteinander kombinierbar sind, um mehr als zwei Arbeitspositionen für den Rollenhebel 8 vorzugeben. Von Vorteil ist es dabei, wenn der zwischen den lagersockelseitigen Schwenklagereinheiten 38 vorhandene Abstand von dem zwischen den schwenkarmseitigen Schwenklagereinheiten 42 vorhandenen Abstand abweicht.

Bei den Ausführungsbeispielen sind die Schwenklagereinheiten 38, 42 und die zu deren Kopplung vorgesehenen Maßnahmen besonders einfach realisiert. Jede Schwenklagereinheit 38, 42 besteht aus einer Lagerausnehmung 43, wobei in jeder Arbeitsposition des Rollenhebels 8 eine Lagerausnehmung 43 des Lagersockels 6 mit einer Lagerausnehmung 43 des Schwenkarms 26 koaxial fluchtet und ein Achsbolzen 44 in die fluchtenden Lagerausnehmungen 43 eingesteckt ist. Bei dem Achsbolzen 44 handelt es sich vorzugsweise um einen Zylinderstift.

Exemplarisch ist der Achsbolzen 44 mit seinen äußeren Endabschnitten am Lagersockel 6 fixiert, während er die Lagerausnehmung 43 des Schwenkarms 26 derart durchsetzt, dass selbiger auf dem Achsbolzen 44 zur Ausübung der Rollenhebel-Schwenkbewegung 24 verdrehbar ist. Zweckmäßigerweise wird der Achsbolzen 44 zumindest einseitig in der Lagerausnehmung 43 des Lagersockels 6 vernietet. Die Längsachse des Achsbolzens 44 fällt mit der Schwenkachse 7 zusammen.

Beim Ausführungsbeispiel hat der Lagersockel 6 zwei von der Sockelplatte 13 in zu der Schwenkachse 7 rechtwinkeligen Ebenen wegragende Sockelschenkel 45. Die beiden Sockelschenkel 45 sind in Achsrichtung der Schwenkachse 7 mit Abstand zueinander angeordnet. Bevorzugt sind sie einstückig mit der Sockelplatte 13 ausgebildet und definieren zusammen mit der Sockelplatte 13 ein U-förmiges Gebilde, dessen U-Öffnung von der vorderen Stirnfläche 14 der Ventileinheit 3 wegweist.

Jede an dem Lagersockel 6 ausgebildete Lagerausnehmung 43 setzt sich aus zwei zueinander koaxialen Ausnehmungsabschnitten 46 zusammen, die in jeweils einem der beiden Sockelschenkel 45 als den betreffenden Sockelschenkel 45 durchsetzende Löcher ausgebildet sind.

Der Schwenkarm 26 hat bevorzugt ein U-förmiges Querschnittsprofil mit zwei sich in Achsrichtung der Schwenkachse 7 mit Abstand gegenüberliegenden Schwenkarmschenkeln 47. Jede als schwenkarmseitige Schwenklagereinheit 42 fungierende Lagerausnehmung 43 setzt sich auch hier aus zwei koaxial miteinander fluchtenden Ausnehmungsabschnitten 48 zusammen, die jeweils in einem der beiden Schwenkarmschenkel 47 als den betreffenden Schwenkarmschenkel 47 durchsetzendes Loch ausgebildet sind. Der Durchmesser der am Schwenkarm 26 ausgebildeten Ausnehmungsabschnitte 48 ist geringfügig größer als der Durchmesser des Achsbolzens 44, sodass die Schwenkbeweglichkeit gewährleistet ist.

Der Schwenkarm 26 erstreckt sich zweckmäßigerweise zwischen den beiden Sockelschenkeln 45. Hat er ein U-förmiges Querschnittsprofil, weist die U-Öffnung zweckmäßigerweise von der vorderen Stirnfläche 14 weg und der die beiden Schwenkarmschenkel 47 verbindende Verbindungssteg 52 definiert jeden der vorhandenen Kraftabgabeabschnitte 33a, 33b.

Die Schwenklagermittel 25 sind vorzugsweise lösbar ausgebildet, sodass jederzeit die Möglichkeit besteht, die Arbeitsposition des Rollenhebels 8 zu wechseln. Andererseits ist eine lösbare Ausgestaltung der Schwenklagermittel 25 nicht zwingend, da sich die Vorteile zur Vorgabe unterschiedlicher Arbeitspositionen auch schon bei der Herstellung der Rollenhebel-Betätigungseinrichtung 2 ab Werk dahingehend nutzen lassen, dass sich unter Verwendung der gleichen Bauteile einfach durch Auswahl der zu koppelnden lagersockelseitigen Schwenklagereinheit 38 und schwenkarmseitigen Schwenklagereinheit 42 die gewünschte Arbeitsposition vorgeben lässt.

## Patentansprüche

1. Rollenhebel-Betätigungseinrichtung für Rollenhebelventile, mit einem zur Fixierung an einer Ventileinheit (3) eines Rollenhebelventils (1a, 1b) dienenden Lagersockel (6) und einem bezüglich des Lagersockels (6) verschwenkbaren Rollenhebel (8), wobei der Rollenhebel (8) einen eine Antriebsrolle (27) tragenden Schwenkarm (26) aufweist, der unter Vorgabe einer Arbeitsposition des Rollenhebels (8) mittels eine Schwenkachse (7) vorgebenden Schwenklagermitteln (25) verschwenkbar an dem Lagersockel (6) gelagert ist und der mindestens einen zu der Schwenkachse (7) beabstandeten Kraftabgabeabschnitt (33a. 33b) aufweist, der zum drückenden Zusammenwirken mit einem einer zu betätigenden Ventilgliedanordnung (15) eines Rollenhebelventils (1a, 1b) zugeordneten Betätigungsabschnitt (19) vorgesehen ist, **dadurch gekennzeichnet, dass** durch die Schwenklagermittel (25) mehrere alternative, sich im Abstand (AK1, AK2) zwischen der Schwenkachse (7) und dem Kraftabgabeabschnitt (33a, 33b) des Schwenkarmes (26) unterscheidende Arbeitspositionen des Rollenhebels (8) vorgebbar sind.

2. Rollenhebel-Betätigungseinrichtung nach Anspruch 1, **dadurch gekennzeichnet, dass** die Schwenklagermittel (25) für eine schwenkbare Montage des Schwenkarms (26) an dem Lagersockel (6) in wenigstens zwei unterschiedlichen Arbeitspositionen ausgebildet sind.

3. Rollenhebel-Betätigungseinrichtung nach Anspruch 1 oder 2, **dadurch gekennzeichnet, dass** an dem Lagersockel (6) mindestens eine lagersockelseitige Schwenklagereinheit (38) und an dem Schwenkarm (26) mindestens eine schwenkarmseitige Schwenklagereinheit (42) ausgebildet ist, wobei mehrere mit Querabstand zueinander angeordnete lagersockelseitige Schwenklagereinheiten (38, 38a, 38b) und/oder mehrere mit Querabstand zueinander angeordnete schwenkarmseitige Schwenklagereinheiten (42) vorhanden sind und wobei zur schwenkbaren Lagerung des Rollenhebels (8) in unterschiedlichen Arbeitspositionen jede lagersockelseitige Schwenklagereinheit (38, 38a, 38b) alternativ mit jeder schwenkarmseitigen Schwenklagereinheit (42) unter Gewährleistung eines Schwenkfreiheitsgrades koppelbar ist.

4. Rollenhebel-Betätigungseinrichtung nach einem der Ansprüche 1 bis 3, **dadurch gekennzeichnet, dass** der Lagersockel (6) mit mehreren quer zu der Schwenkachse (7) zueinander beabstandeten lagersockelseitigen Schwenklagereinheiten (38, 38a, 38b) und der Schwenkarm (26) mit mindestens einer und zweckmäßigerweise mit genau einer schwenkarmseitigen Schwenklagereinheit (42) versehen ist, wobei der Schwenkarm (26) zur Vorgabe unterschiedlicher Arbeitspositionen des Rollenhebels (8) mittels ein und derselben schwenkarmseitigen Schwenklagereinheit (42) wahlweise mit jeder der mehreren lagersockelseitigen Schwenklagereinheiten (38) koppelbar ist.

5. Rollenhebel-Betätigungseinrichtung nach Anspruch 3 oder 4, **dadurch gekennzeichnet, dass** die Schwenklagermittel (25) zur schwenkbaren Kopplung des Schwenkarmes (26) mit dem Lagersockel (6) über mindestens einen zur Schwenkachse (7) koaxialen Achsbolzen (44) verfügen.

6. Rollenhebel-Betätigungseinrichtung nach Anspruch 5, **dadurch gekennzeichnet, dass** jede Schwenklagereinheit (38, 38a, 38b, 42) eine zur Aufnahme eines Achsbolzens (44) geeignete Lagerausnehmung (43) aufweist, wobei zur Kopplung einer lagersockelseitigen Schwenklagereinheit (38) mit einer schwenkarmseitigen Schwenklagereinheit (42) deren Lagerausnehmungen (43) koaxial zueinander angeordnet und von einem gemeinsam zugeordneten Achsbolzen (44) durchsetzt sind.

7. Rollenhebel-Betätigungseinrichtung nach Anspruch 6, **dadurch gekennzeichnet, dass** mindestens eine Lagerausnehmung (43) der lagersockelseitigen Schwenklagereinheit (38) und/oder der schwenkarmseitigen Schwenklagereinheit (42) aus zwei zueinander koaxialen und axial beabstandet zueinander angeordneten Ausnehmungsabschnitten (46, 48) besteht.

8. Rollenhebel-Betätigungseinrichtung nach einem der Ansprüche 1 bis 7, **dadurch gekennzeichnet, dass** der Lagersockel (6) einen Arbeitsbereich (23) aufweist, in dem das Zusammenwirken des Schwenkarmes (26) mit einem der zu betätigenden Ventilgliedanordnung (15) eines Rollenhebelventils (1a, 1b) zugeordneten Betätigungsabschnitt (19) vorgesehen ist, wobei der Schwenkarm (26) mehrere quer zu der Schwenkachse (7) unmittelbar oder beabstandet nebeneinander angeordnete Kraftabgabeabschnitte (33a, 33b) aufweist, die abhängig von der Arbeitsposition des Rollenhebels (8) selektiv in dem Arbeitsbereich (23) positioniert sind.

9. Rollenhebel-Betätigungseinrichtung nach einem der Ansprüche 1 bis 8, **dadurch gekennzeichnet, dass** die Antriebsrolle (27) an einem schwenkbeweglich an dem Schwenkarm (26) gelagerten Kipparm (34) angeordnet ist, wobei der Kipparm (34) zweckmäßigerweise federnd in eine bezüglich des Schwenkarmes (26) eingenommene Grundstellung vorgespannt ist.

10. Rollenhebel-Ventilanordnung mit mindestens einem Rollenhebelventil (1a, 1b), das mit einer Rollenhebel-Betätigungseinrichtung (2) nach einem der Ansprüche 1 bis 9 ausgestattet ist.

11. Rollenhebel-Ventilanordnung nach Anspruch 10, **dadurch gekennzeichnet, dass** das Rollenhebelventil (1a, 1b) eine Ventileinheit (3) mit einem Ventilgehäuse (5) und einer bezüglich des Ventilgehäuses (5) zwischen verschiedenen Schaltstellungen umschaltbaren Ventilgliedanordnung (15) aufweist, wobei die Rollenhebel-Betätigungseinrichtung (2) mit ihrem Lagersockel (6) außen an dem Ventilgehäuse (5) angeordnet ist und der Kraftabgabeabschnitt (33a, 33b) des Schwenkarms (26) in einem außerhalb des Ventilgehäuses (5) liegenden Arbeitsbereich (23) zur Ausübung einer Umschaltkraft an einem unter Ausführung einer Betätigungsbewegung (22) bezüglich des Ventilgehäuses (5) beweglichen Betätigungsabschnitt (19) des Rollenhebelventils (1a, 1b) anliegt, der antriebsmäßig mit der Ventilgliedanordnung (15) des Rollenhebelventils (1a, 1b) zusammenwirkt oder unmittelbar ein Bestandteil der Ventilgliedanordnung (15) des Rollenhebelventils (1a, 1b) ist.

12. Rollenhebel-Ventilanordnung nach Anspruch 10 oder 11, **dadurch gekennzeichnet, dass** sie über mehrere Rollenhebelventile (1a, 1b) verfügt, die jeweils mit einer Rollenhebel-Betätigungseinrichtung (2) ausgestattet sind, wobei sich mehrere Rollenhebelventile (1a, 1b) dadurch voneinander unterscheiden, dass die Rollenhebel (8) ihrer Rollenhebel-Betätigungseinrichtungen (2) in sich voneinander unterscheidenden Arbeitspositionen am Lagersockel (6) montiert sind.

13. Rollenhebel-Ventilanordnung nach Anspruch 12, **dadurch gekennzeichnet, dass** sich die Betätigungsabschnitte (19) mehrerer Rollenhebelventile (1a, 1b) in dem zur Betätigung der zugeordneten Ventilgliedanordnung (15) auszuführenden Arbeitshub (A) ihrer Betätigungsbewegung (22) voneinander unterscheiden, wobei die Rollenhebel (8) der mehreren Rollenhebelventile (1a, 1b) derart in unterschiedlichen Arbeitspositionen am zugeordneten Lagersockel (6) montiert sind, dass der Schwenkweg ihrer mit den Betätigungsabschnitten (19) kooperierenden Kraftabgabeabschnitte (33a, 33b) bei gleichem Betriebs-Schwenkwinkel des Schwenkarmes (26) unterschiedlich groß und an den Arbeitshub (A) des jeweils zugeordneten Betätigungsabschnittes (19) angepasst ist.

14. Rollenhebel-Ventilanordnung nach Anspruch 12 oder 13, **dadurch gekennzeichnet, dass** mindestens ein mit der Rollenhebel-Betätigungseinrichtung (2) ausgestattetes Rollenhebelventil (1a, 1b) ein Kolbenschieberventil und mindestens ein ebenfalls mit der Rollenhebel-Betätigungseinrichtung (2) ausgestattetes Rollenhebelventil (1a, 1b) ein Sitzventil ist.

15. Rollenhebel-Ventilanordnung nach einem der Ansprüche 11 bis 14, **dadurch gekennzeichnet, dass** die Rollenhebel-Betätigungseinrichtung (2) an einer axialen Stirnseite (14) des Ventilgehäuses (5) des zugeordneten Rollenhebelventils (1a, 1b) angeordnet ist.

## Claims

1. Roller lever actuating device for roller lever valves, with a bearing base (6) serving for the fixing to a valve unit (3) of a roller lever valve (1a, 1b) and a roller lever (8) pivotable relative to the bearing base (6), where the roller lever (8) has a pivot arm (26) carrying a drive roller (27), which is pivotably mounted on the bearing base by means of a pivot-bearing means predetermining a pivot axis, with a specified operating position of the roller lever (8), and which has at least one force output section (33a, 33b) spaced apart from the pivot axis (7), which is provided for pressure-exerting interoperation with an actuating section (19) associated with a valve member arrangement of a roller lever valve (1a, 1b) to be actuated, **characterised in that** a plurality of alternative operating positions of the roller lever (8) which differ with respect to the distance (AK1, AK2) between the pivot axis (7) and the force output section (33a, 33b) of the pivot arm (26) can be predetermined by the pivot bearing means (25).

2. Roller lever actuating device according to Claim 1, **characterised in that** the pivot bearing means (25) for a pivotable mounting of the pivot arm (26) on the bearing base (6) are formed in at least two different operating positions.

3. Roller lever actuating device according to Claim 1 or 2, **characterised in that** at least one pivot-bearing unit (38) on the bearing base side is formed on the bearing base (6) and at least one pivot-bearing unit (42) on the pivot arm side is formed on the pivot arm (26), where a plurality of pivot-bearing units (38, 38a, 38b) on the bearing base side and/or a plurality of pivot-arm-side pivot-bearing units (42) both arranged at a transverse distance from one another are present, and where, for the pivotable mounting of the roller lever (8) in different operating positions, each pivot-bearing unit (38, 38a, 38b) on the bearing base side can alternatively be coupled to each pivot-arm-side pivot-bearing unit (42) while ensuring a degree of freedom of pivoting movement.

4. Roller lever actuating device according to any one of Claims 1 to 3, **characterised in that** the bearing base (6) is provided with a plurality of pivot-bearing units (38, 38a, 38b) on the bearing base side, spaced apart from one another transversely to the pivot axis (7), and the pivot arm (26) is provided with at least one pivot-bearing unit (42) on the pivot arm side and, expediently, with exactly one pivot-bearing unit (42), the pivot arm (26) being selectively couplable to each of the more than one pivot-bearing units (38) on the bearing base side in order to set different operating positions of the roller lever (8) by means of one and the same pivot-bearing unit (42) on the pivot arm side.

5. Roller lever actuating device according to Claim 3 or 4, **characterised in that** the pivot-bearing means (25) for pivotably coupling the pivot arm (26) to the bearing base (6) has at least one axle pin (44)coaxial with the pivot axis (7).

6. Roller lever actuating device according to Claim 5, **characterised in that** each pivot-bearing unit (38, 38a, 38b, 42) has a bearing recess (43) suitable for receiving an axle pin (44), where for coupling a pivot-bearing unit (38) on the bearing base side with a pivot arm-side pivot bearing unit (42) whose bearing recesses (43) are arranged coaxially to one another and are penetrated by a jointly associated axle pin (44).

7. Roller lever actuating device according to Claim 6, **characterised in that** at least one bearing recess (43) of the pivot-bearing unit (38) on the bearing base side and/or of the pivot-bearing unit (42) on the pivot arm side comprises two recess sections(46, 48) arranged coaxially to one another and axially spaced apart from one another.

8. Roller lever actuating device according to any one of Claims 1 to 7, **characterised in that** the bearing base (6) has an operating region (23) in which provision is made for the interoperation of the pivot arm (26) with an actuating section (19) assigned to the valve member arrangement (15) to be actuated of a roller lever valve (1a. 1b), where the pivot arm (26) has a plurality of force output sections (33a, 33b) which are arranged directly or at a distance next to one another transversely to the pivot axis (7) and which are selectively positioned in the operating region (23) as a function of the operating position of the roller lever (8).

9. Roller lever actuating device according to any one of Claims 1 to 8, **characterised in that** the drive roller (27)is arranged on a tilting arm (34) mounted pivotably movably on the pivot arm (26), wherein the tilting arm (34) is expediently resiliently pretensioned into a basic position assumed relative to the pivot arm (26).

10. Roller lever valve arrangement comprising at least one roller lever valve (1a, 1b) equipped with a roller lever actuating device (2) according to any one of Claims 1 to 9.

11. Roller lever valve arrangement according to Claim 10, **characterised in that** the roller lever valve (1a, 1b) has a valve unit (3) with a valve housing (5) and a valve member arrangement (15) switchable between different switching positions with respect to the valve housing (5),wherein the roller lever actuating device (2) with its bearing base (6) is arranged externally on the valve housing (5) and where, for the exertion of a switching force, the force output section (33a, 33b) of the pivot arm (26) in an operating region (23) outside the valve housing (5), is in contact with an actuating section (19) of the roller lever valve (1a, 1b) which is movable with respect to the valve housing (5) while executing an actuating movement (22),which interoperates drivingly with the valve member arrangement (15) of the roller lever valve (1a, 1b) or is directly a component of the valve member arrangement (15) of the roller lever valve (1a, 1b).

12. Roller lever valve arrangement according to Claim 10 or 11, **characterised in that** it has several roller lever valves (1a, 1b), which are each equipped with a roller lever actuating device (2), wherein several roller lever valves (1a, 1b) differ from one another **in that** the roller levers (8) of their roller lever actuating devices (2) are mounted on the bearing base (6) in operating positions which differ from one another.

13. Roller lever valve arrangement according to Claim 12, **characterised in that** the actuating sections (19) of a plurality of roller lever valves (1a, 1b) differ from one another in the working stroke (lA) of their actuating movement (22) to be executed to actuate the associated valve member arrangement (15), the roller levers (8) of the plurality of roller lever valves (1a, 1b) being mounted in different working positions on the associated bearing base (6) in such a way that the pivoting path of their force output sections (33a, 33b) cooperating with the actuating sections (19) is of different magnitude with the same operating pivot angle of the pivot arm (26) and is adapted to the working stroke (A) of the respectively associated actuating section (19).

14. Roller lever valve arrangement according to Claim 12 or 13, **characterised in that** at least one roller lever valve (1a, 1b) equipped with the roller lever actuating device (2) is a piston slide valve and at least one roller lever valve (1a, 1b) likewise equipped with the roller lever actuating device (2) is a seat valve.

15. Roller lever valve arrangement according to any one of Claims 11 to 14, **characterised in that** the roller lever actuating device (2) is arranged on an axial front side (14) of the valve housing (5) of the associated roller lever valve (1a, 1b).

## Revendications

1. Dispositif d'actionnement de levier à galet pour des soupapes à levier à galet, avec un socle de palier (6) destiné à être bloqué au niveau d'une unité de soupape (3) d'une soupape à levier à galet (1a, 1b) et un levier à galet (8) pouvant pivoter par rapport au socle de palier (6), dans lequel le levier à galet (8) présente un bras pivotant (26) supportant un galet d'entraînement (27), qui est monté au niveau du socle de palier (6) de manière à pouvoir pivoter au moyen de moyens de palier pivotant (25) spécifiant un axe de pivotement (7) en spécifiant une position de travail du levier à galet (8) et qui présente au moins une section d'émission de force (33a, 33b) espacée par rapport à l'axe de pivotement (7), qui est prévue pour coopérer en exerçant une pression avec une section d'actionnement (19) associée à un ensemble organe de soupape (15) à actionner d'une soupape à levier à galet (1a, 1b), **caractérisé en ce que** plusieurs positions de travail du levier à galet (8) proposées en variante, différentes en termes d'espacement (AK1, AK2) entre l'axe de pivotement (7) et la section d'émission de force (33a, 33b) du bras pivotant (26) peuvent être spécifiées par les moyens de palier pivotant (25).

2. Dispositif d'actionnement de levier à galet selon la revendication 1, **caractérisé en ce que** les moyens de palier pivotant (25) sont réalisés pour un montage pivotant du bras pivotant (26) au niveau du socle de palier (6) dans au moins deux positions de travail différentes.

3. Dispositif d'actionnement de levier à galet selon la revendication 1 ou 2, **caractérisé en ce qu'**au moins une unité de palier pivotant (38) côté socle de palier est réalisée au niveau du socle de palier (6) et au moins une unité de palier pivotant (42) côté bras pivotant est réalisée au niveau du bras pivotant (26), dans lequel plusieurs unités de palier pivotant (38, 38a, 38b) côté socle de palier disposées selon un espacement transversal les unes par rapport aux autres et/ou plusieurs unités de palier pivotant (42) côté bras pivotant disposées selon un espacement transversal les unes par rapport aux autres sont présentes et dans lequel pour supporter avec une possibilité de pivotement le levier à galet (8) dans des positions de travail différentes, chaque unité de palier pivotant (38, 38a, 38b) côté socle de palier peut être couplée en variante à chaque unité de palier pivotant (42) côté bras pivotant en garantissant un degré de liberté de pivotement.

4. Dispositif d'actionnement de levier à galet selon l'une quelconque des revendications 1 à 3, **caractérisé en ce que** le socle de palier (6) est pourvu de plusieurs unités de palier pivotant (38, 38a, 38b) côté socle de palier espacées les unes par rapport aux autres de manière transversale par rapport à l'axe de pivotement (7) et le bras pivotant (26) est pourvu d'au moins et de manière appropriée de précisément une unité de palier pivotant (42) côté bras pivotant, dans lequel le bras pivotant (26) peut être couplé au choix à chacune des nombreuses unités de palier pivotant (38) côté socle de palier au moyen d'une seule et même unité de palier pivotant (42) côté bras pivotant pour spécifier différentes positions de travail du levier à galet (8).

5. Dispositif d'actionnement de levier à galet selon la revendication 3 ou 4, **caractérisé en ce que** les moyens de palier pivotant (25) servant à coupler de manière à pouvoir pivoter le bras pivotant (26) au socle de palier (6) disposent d'au moins un pivot d'axe (44) coaxial par rapport à l'axe de pivotement (7).

6. Dispositif d'actionnement de levier à galet selon la revendication 5, **caractérisé en ce que** chaque unité de palier pivotant (38, 38a, 38b) présente un évidement de palier (43) adapté pour recevoir un pivot d'axe (44), dans lequel pour coupler une unité de palier pivotant (38) côté socle de palier à une unité de palier pivotant (42) côté bras pivotant, leurs évidements de palier (43) sont disposés de manière coaxiale les uns par rapport aux autres et sont traversés par un pivot d'axe (44) associé commun.

7. Dispositif d'actionnement de levier à galet selon la revendication 6, **caractérisé en ce qu'**au moins un évidement de palier (43) de l'unité de palier pivotant (38) côté socle de palier et/ou de l'unité de palier pivotant (42) côté bras pivotant est constitué de deux sections d'évidement (46, 48) disposées de manière coaxiale et de manière axialement espacée l'une par rapport à l'autre.

8. Dispositif d'actionnement de levier à galet selon l'une quelconque des revendications 1 à 7, **caractérisé en ce que** le socle de palier (6) présente une zone de travail (23), dans laquelle est prévue la coopération du bras pivotant (26) avec une section d'actionnement (19) associée à l'ensemble organe de soupape (15) à actionner d'une soupape à levier à galet (1a, 1b), dans lequel le bras pivotant (26) présente plusieurs sections d'émission de force (33a, 33b) disposées les unes à côté des autres directement ou de manière espacée de manière transversale par rapport à l'axe de pivotement (7), qui sont positionnées de manière sélective dans la zone de travail (23) en fonction de la position de travail du levier à galet (8).

9. Dispositif d'actionnement de levier à galet selon l'une quelconque des revendications 1 à 8, **caractérisé en ce que** le galet d'entraînement (27) est disposé au niveau d'un bras basculant (34) monté de manière mobile par pivotement au niveau du bras pivotant (26), dans lequel le bras basculant (34) est précontraint de manière appropriée sur ressorts dans une position de base adoptée par rapport au bras pivotant (26).

10. Ensemble soupape à levier à galet avec au moins une soupape à levier à galet (1a, 1b), qui est équipée d'un dispositif d'actionnement de levier à galet (2) selon l'une quelconque des revendications 1 à 9.

11. Ensemble soupape à levier à galet selon la revendication 10, **caractérisé en ce que** la soupape à levier à galet (1a, 1b) présente une unité de soupape (3) avec un carter de soupape (5) et un ensemble organe de soupape (15) pouvant être commuté par rapport au carter de soupape (5) entre différentes positions de commutation, dans lequel le dispositif d'actionnement de levier à galet (2) est disposé par son socle de palier (6) à l'extérieur au niveau du carter de soupape (5) et la section d'émission de force (33a, 33b) du bras pivotant (26) repose dans une zone de travail (23) se trouvant à l'extérieur du carter de soupape (5) servant à exercer une force de commutation au niveau d'une section d'actionnement (19), mobile par rapport au carter de soupape (5) en exécutant un mouvement d'actionnement (22), de la soupape à levier à galet (1a, 1b), qui coopère en entraînement avec l'ensemble organe de soupape (15) de la soupape à levier à galet (1a, 1b) ou fait directement partie intégrante de l'ensemble organe de soupape (15) de la soupape à levier à galet (1a, 1b).

12. Ensemble de soupapes à levier à galet selon la revendication 10 ou 11, **caractérisé en ce qu'**il dispose de plusieurs soupapes à levier à galet (1a, 1b), qui sont équipées respectivement d'un dispositif d'actionnement de levier à galet (2), dans lequel plusieurs soupapes à levier à galet (1a, 1b) se différencient les unes des autres **en ce que** les leviers à galet (8) de leurs dispositifs d'actionnement de levier à galet (2) sont montés au niveau du socle de palier (6) dans des positions de travail se distinguant les unes des autres.

13. Ensemble de soupapes à levier à galet selon la revendication 12, **caractérisé en ce que** les sections d'actionnement (19) de plusieurs soupapes à levier à galet (1a, 1b) se distinguent les unes des autres dans la course de travail (A) de leur mouvement d'actionnement (22) à exécuter pour actionner l'ensemble organe de soupape (15) associé, dans lequel les leviers à galet (8) des nombreuses soupapes à levier à galet (1a, 1b) sont montés de telle manière dans des positions de travail différentes au niveau du socle de palier (6) associé, que le trajet de pivotement de leurs sections d'émission de force (33a, 33b) coopérant avec les sections d'actionnement (19) présente une grandeur différente pour un angle de pivotement de service identique du bras pivotant (26) et est adapté à la course de travail (A) de la section d'actionnement (19) respectivement associée.

14. Ensemble de soupapes à levier à galet selon la revendication 12 ou 13, **caractérisé en ce qu'**au moins une soupape à levier à galet (1a, 1b) équipée du dispositif d'actionnement de levier à galet (2) est un distributeur à tiroir cylindrique et au moins une soupape à levier à galet (1a, 1b) équipée également du dispositif d'actionnement de levier à galet (2) est une soupape à siège.

15. Ensemble de soupapes à levier à galet selon l'une quelconque des revendications 11 à 14, **caractérisé en ce que** le dispositif d'actionnement de levier à galet (2) est disposé au niveau d'un côté frontal (14) axial du carter de soupape (5) de la soupape à levier à galet (1a, 1b) associée.
